# EUROPEAN PATENT APPLICATION

(11) **EP 3 866 557 A1**
(43) Date of publication of application: **18.08.2021**
(21) Application number: 19871888.4
(22) Date of filing: 08.10.2019
(51) Int. Cl.: H04W 76/27, H04W 16/32, H04W 72/04, H04W 88/06

(54) **USER DEVICE AND BASE STATION DEVICE**

(30) Priority: 10.10.2018 JP 2018192169
(71) Applicant: NTT DOCOMO, INC., Chiyoda-ku Tokyo 100-6150 (JP)
(72) Inventor: MATSUKAWA, Ryusuke, Tokyo 100-6150 (JP); TAKAHASHI, Hideaki, Tokyo 100-6150 (JP); UCHINO, Tooru, Tokyo 100-6150 (JP); MIN, Tianyang, Tokyo 100-6150 (JP)
(74) Representative: Hoffmann Eitle
(86) International application number: PCT/JP2019/039686
(87) International publication number: WO 2020/075721

(57) **Abstract**

User equipment includes a communication unit that performs first communication with a first base station apparatus and second communication with a second base station apparatus by applying dual connectivity; and a control unit that starts or restarts a data inactivity timer in a MAC (Media Access Control) entity for the first communication and that starts or restarts a data inactivity timer in a MAC entity for the second communication, upon occurrence of transmission or reception in any of the first communication and the second communication.

## Description

### TECHNICAL FIELD

The present invention relates to user equipment and a base station apparatus of a radio communication system.

### BACKGROUND ART

In 3GPP (3rd Generation Partnership project), a radio communication scheme called 5G or NR (New Radio) has been studied (in the following, the radio communication scheme is referred to as "5G" or "NR"), in order to achieve further increase in system capacity, further increase in a data transmission rate, and further reduction of latency in the radio section. In 5G, various radio technologies and network architectures have been studied (e.g., Non-Patent Document 1) in order to meet a requirement that latency in a radio section is reduced to be less than or equal to 1 ms, while achieving a throughput of greater than or equal to 10 Gbps.

In the NR system, a technique called E-UTRA-NR dual connectivity (hereinafter referred to as "EN-DC") or Multi Radio Access Technology (RAT) dual connectivity (hereinafter referred to as "MR-DC") has been introduced (for example, Non-Patent Document 2), which divides data between a base station (eNB) of the LTE system and a base station (gNB) of the NR system and simultaneously transmits and receives data by these base stations, similar to dual connectivity in the LTE system.

### Related Art Document

### [Non-Patent Document]

Non-Patent Document 1: 3GPP TS 38.331 V15.3.0 (2018-09)
Non-Patent Document 2: 3GPP TS 37.340 V15.3.0 (2018-09)

### SUMMARY OF THE INVENTION

### [PROBLEM TO BE SOLVED BY THE INVENTION]

Inconsistency in RRC (Radio Resource Control) states occurs when user equipment fails to receive a call release indication transmitted from a base station apparatus. Accordingly, in order to resolve the inconsistency in the RRC states, communication state monitoring by a Data Inactivity Timer has been introduced. However, during communication to which dual connectivity is applied, an operation has been unclear when multiple MAC entities monitor respective communication states.

The present invention has been accomplished in view of the above-described point, and an object is to appropriately monitor a communication state during communication to which dual connectivity is applied.

### [MEANS FOR SOLVING THE PROBLEM]

According to the disclosed technology, there is provided user equipment including a communication unit that performs first communication with a first base station apparatus and second communication with a second base station apparatus by applying dual connectivity; and a control unit that starts or restarts a data inactivity timer in a MAC (Media Access Control) entity for the first communication and that starts or restarts a data inactivity timer in a MAC entity for the second communication, upon occurrence of transmission or reception in any of the first communication and the second communication.

### [ADVANTAGE OF THE INVENTION]

According to the disclosed technology, a communication state can be appropriately monitored during communications to which dual connectivity is applied.

### BRIEF DESCRIPTION OF DRAWINGS

FIG. 1 is a diagram for illustrating inconsistency between RRC states;
FIG. 2 is a diagram for illustrating an operation for resolving the inconsistency between the RRC states;
FIG. 3 is a diagram illustrating an example of a radio communication system according to an embodiment of the present invention;
FIG. 4 is a diagram for illustrating an operation example of the radio communication system;
FIG. 5 is a flowchart illustrating an example (1) of a monitoring operation according to an embodiment of the present invention;
FIG. 6 is a flowchart illustrating an example (2) of a monitoring operation according to an embodiment of the present invention;
FIG. 7 is a sequence diagram for illustrating an example of a monitoring operation according to an embodiment of the present invention;
FIG. 8 is a diagram illustrating an example of a functional configuration of a base station apparatus 10 according to an embodiment of the present invention;
FIG. 9 is a diagram illustrating an example of a functional configuration of user equipment 20 according to an embodiment of the present invention; and
FIG. 10 is a diagram illustrating an example of a hardware configuration of the base station apparatus 10 or the user equipment 20 according to an embodiment of the present invention.

### [EMBODIMENTS OF THE INVENTION]

In the following, embodiments of the present invention are described with reference to the drawings. Note that the embodiments described below are examples, and embodiments to which the present invention is applied are not limited to the following embodiments.

For an operation of a radio communication system according to an embodiment of the present invention, existing techniques are used as appropriate. Here, the existing technology is, for example, an existing LTE. However, the existing technology is not limited to the existing LTE. The term "LTE" as used herein is expected to have a broad meaning including LTE-Advanced and a scheme subsequent to LTE-Advanced (e.g., NR), or wireless LAN (Local Area Network), unless as otherwise specified.

In embodiments of the present invention, a duplex scheme may be a TDD (Time Division Duplex) scheme, a FDD (Frequency Division Duplex) scheme, or any other scheme (e.g., Flexible Duplex, etc.).

In embodiments of the present invention, "configuring" a radio parameter, etc., may imply that a predetermined value is preconfigured, or that a radio parameter signaled from a base station apparatus 10 or user equipment 20 is configured.

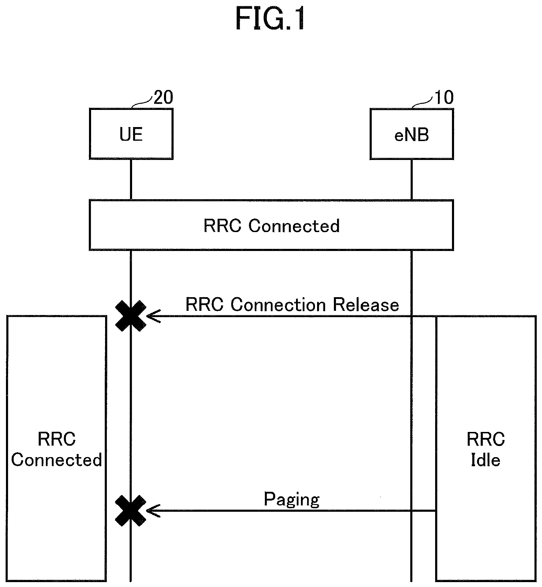

FIG. 1 is a diagram for illustrating inconsistency between RRC states. As illustrated in FIG. 1, when an RRC state of the user equipment, i.e., the UE (User Equipment) 20, and an RRC state of the base station apparatus, i.e., the eNB 10, are "RRC Connected," and when the UE 20 fails to receive "RRC Connection Release," which is a call release indication from the eNB 10, the eNB 10 transitions to "RRC Idle," while the UE 20 maintains "RRC Connected." As a result, inconsistency in the RRC states between the eNB 10 and the UE 20 occurs.

When the RRC state in the eNB 10 is "RRC Idle" and the RRC state in the UE 20 is "RRC Connected," even if the eNB 10 sends Paging to the UE 20, the UE 20 does not receive the Paging. As a result, an event occurs in which an incoming call is not communicated to the UE 20. It is specified that only the "RRC Idle" is an RRC state in which the UE receives Paging from the eNB 10.

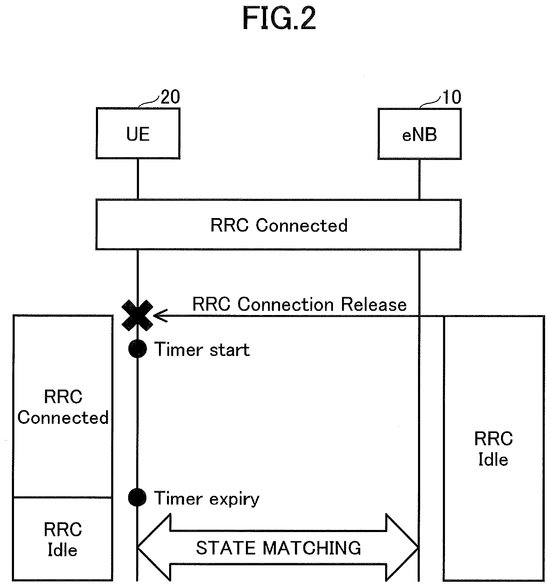

FIG. 2 is a diagram for illustrating an operation for resolving the inconsistency between the RRC states. As illustrated in FIG. 1, since inconsistency in the RRC states between the eNB 10 and the UE 20 may occur, a "Data Inactivity Monitoring" function has been introduced to resolve the inconsistency between the RRC states. During "RRC Connected," the eNB 10 configures "Data Inactivity Timer" for the UE 20. The UE 20 measures a non-communication period in DL (Downlink) or UL (Uplink) by the "Data Inactivity Timer." Upon expiration of the "Data Inactivity Timer," the UE 20 autonomously transitions to the "RRC Idle" state.

As illustrated in FIG. 2, by the above-described "Data Inactivity Monitoring" function, even if reception of "RRC Connection Release" is failed, the UE 20 transitions to the "RRC Idle" upon expiration of the "Data Inactivity Timer." Namely, the RRC states between the eNB 10 and the UE 20 can be matched by transitioning to the "RRC Idle" state in both eNB 10 and UE 20.

Specifically, the MAC (Media Access Control) entity starts or restarts the "Data Inactivity Timer" upon reception of a MAC SDU (Service data unit) of a DTCH (Dedicated Traffic Channel) logical channel, a DCCH (Dedicated Control Channel) logical channel, or a CCCH (Common Control Channel) logical channel, or upon transmission of a MAC SDU of the DTCH logical channel or the DCCH logical channel. Upon expiration of the "Data Inactivity Timer," the MAC entity reports, to a higher layer, the expiration of the "Data Inactivity Timer".

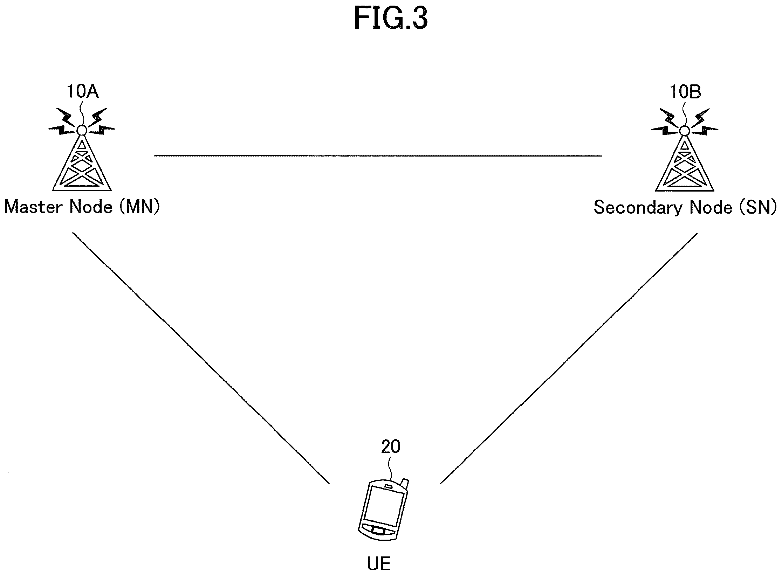

FIG. 3 is a diagram illustrating an example of a radio communication system according to an embodiment of the present invention. FIG. 3 is a schematic diagram illustrating a radio communication system during EN-DC.

As illustrated in FIG. 3, the UE 20, which is user equipment, communicates with a base station apparatus 10A provided by an LTE system and a base station apparatus 10B provided by an NR system (which may be referred to as the "base station apparatus 10" in the following, if the base station apparatus 10A and the base station apparatus 10B are not distinguished). The user equipment 20 further supports LTE-NR dual connectivity, i.e., EN-DC, in which the base station apparatus 10A is a master node (hereinafter referred to as "MN") and the base station apparatus 10B is a secondary node (hereinafter referred to as "SN"). The user equipment 20 may simultaneously use a plurality of component carriers provided by the base station apparatus 10A which is the master node and the base station apparatus 10B which is the secondary node to perform simultaneous transmission or reception with the base station apparatus 10A which is the master node and the base station apparatus 10B which is the secondary node. Note that, in the illustrated example, each of the LTE system and the NR system has only one base station. However, in general, a large number of base station apparatuses 10 are located that cover service areas of the LTE system and the NR system.

The following embodiments are described with reference to LTE-NR dual connectivity. However, dual connectivity of the radio communication system according to embodiments of the present invention is not limited to the LTE-NR dual connectivity. Dual connectivity of the radio communication system according to embodiments of the present invention may be dual connectivity between multiple radio communication systems using different RATs, i.e., MR-DC (Multi-RAT dual connectivity). Dual connectivity of the radio communication system according to embodiments of the present invention may be NE-DC (NR-E-UTRA Dual Connectivity), may be dual connectivity in which the base station apparatus 10A and the base station apparatus 10B are in LTE systems, or may be dual connectivity in which the base station apparatus 10A and the base station apparatus 10B are in NR systems.

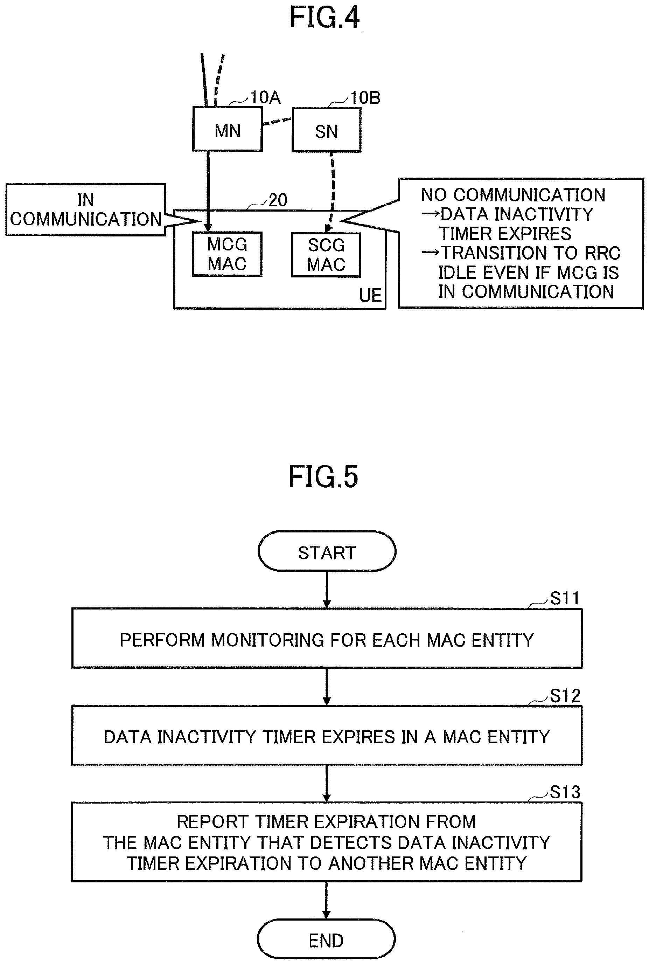

FIG. 4 is a diagram for illustrating an operation example of a radio communication system. In the current standard specification, during communication to which dual connectivity is applied, each MAC entity has a "Data Inactivity Monitoring" function. Accordingly, as illustrated in FIG. 4, when the UE 20 performs communication, to which dual connectivity is applied, with the MN 10A and the SN 10B, even if communication with the MN 10, which forms a MCG (Master Cell Group), is in progress, if non-communication with the SN 10B, which forms a SCG (Secondary Cell Group), continues, the Data Inactivity Timer of the MAC entity of the SCG expires, and the RRC state of the SCG transitions to the "RRC Idle." Since the RRC state of the MCG is "RRC Connected," inconsistency occurs between the RRC states of the MCG and the SCG.

In order to avoid inconsistency between the RRC states of the MCG and the SCG, the "Data Inactivity Monitoring" function is executed on a user equipment 20-by-user equipment 20 basis, instead of executing the "Data Inactivity Monitoring" function on a MAC entity-by-MAC entity basis. Namely, upon occurrence of transmission or reception of a MAC SDU in a MAC entity of a plurality of MAC entities, the "Data Inactivity Timer" may be started or restarted in all the MAC entities. Reception of a MAC SDU is reception on a DTCH logical channel, a DCCH logical channel, or a CCCH logical channel, and transmission of a MAC PDU is transmission on a DTCH logical channel or a DCCH logical channel. Here, as for "transmission of a MAC SDU," the user equipment 20 may or may not regard a PDU (Protocol Data Unit) or an SDU created prior to an actual transmission timing, which is actually not transmitted through radio, as "transmitted," i.e., occurrence of transmission. Furthermore, upon expiration of the "Data Inactivity Timer" in a MAC entity, the MAC entity may report, to a higher layer, the expiration of the "Data Inactivity Timer."

Alternatively, as another example, when only one "Data Inactivity Timer" is defined in the user equipment 20 and transmission or reception of a MAC SDU occurs in a MAC entity, the user equipment 20 may start or restart the one "Data Inactivity Timer." Upon expiration of the one "Data Inactivity Timer" in the user equipment 20, the MAC entities may report, to respective higher layers, the expiration of the "Data Inactivity Timer."

FIG. 5 is a flowchart illustrating an example (1) of a monitoring operation according to an embodiment of the present invention. FIG. 5 shows an example of an operation of the "Data Inactivity Monitoring" function of the UE 20.

In step S11, the UE 20 performs monitoring for each MAC entity. Subsequently, in a MAC entity, expiration of the Data Inactivity Timer is detected (S12). Subsequently, the detection of the expiration is reported from the MAC entity in which the expiration of the Data Inactivity Timer is detected to another MAC entity, and the flow is terminated (S13).

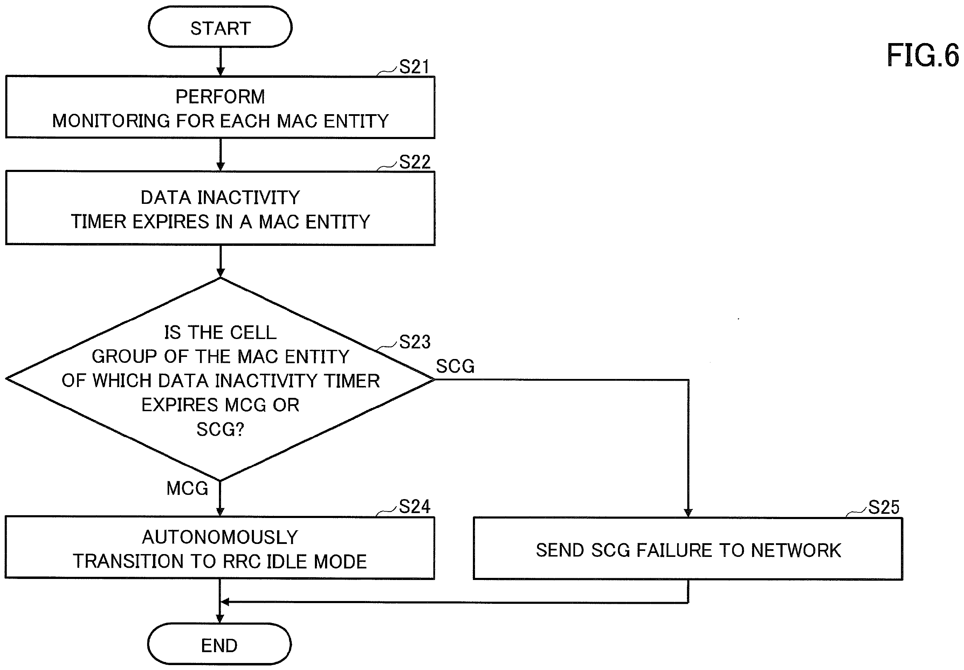

FIG. 6 is a flowchart illustrating an example (2) of a monitoring operation according to an embodiment of the present invention. FIG. 6 shows an example of the operation of the "Data Inactivity Monitoring" function of the UE 20.

In step S21, the UE 20 performs monitoring for each MAC entity. Subsequently, in a MAC entity, expiration of the Data Inactivity Timer is detected (S22). Subsequently, the UE 20 determines whether the cell group of the MAC entity in which the expiration of the Data Inactivity Timer is detected is the MCG or the SCG (S23). If the cell group is the MCG, processing proceeds to step S24. If the cell group is the SCG, processing proceeds to step S25.

In step S24, the UE 20 autonomously transitions to the "RRC Idle" state and terminates the flow. In step S25, the UE 20 sends "SCG Failure" to the network and terminates the flow.
The "SCG Failure" indicates that a radio link failure has occurred in the SCG. The "SCG Failure" may be transmitted from the UE 20 to the MN.

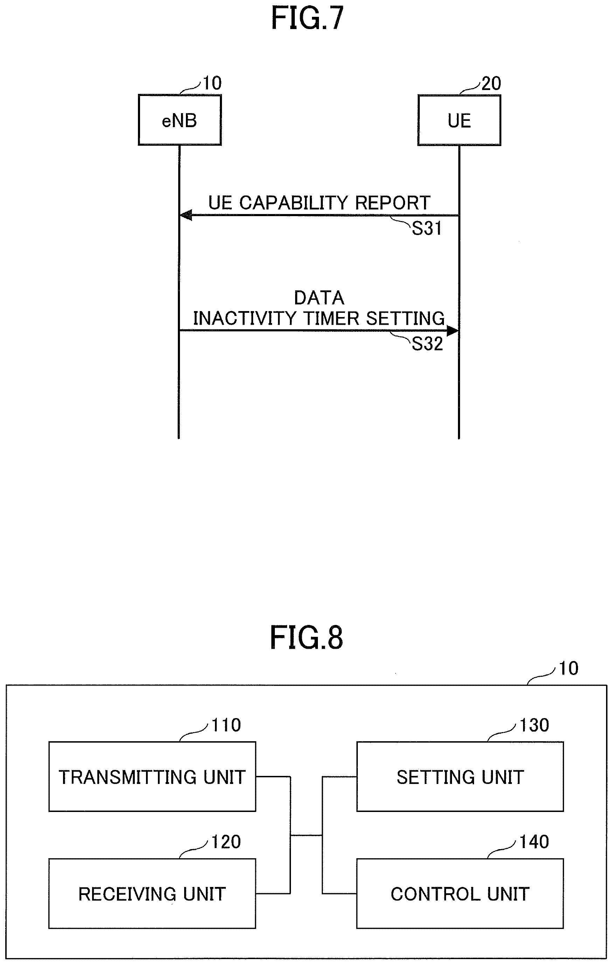

FIG. 7 is a sequence diagram for illustrating an example of a monitoring operation according to an embodiment of the present invention. The eNB 10 illustrated in FIG. 7 is an example in which the system is LTE. For example, if the system is NR, the eNB 10 may be replaced with a gNB 10.

In step S31, the UE 20 transmits a "UE capability report" to the eNB 10. The "UE capability report" includes information indicating capability of the "Data Inactivity Monitoring" function. The information indicating the capability of the "Data Inactivity Monitoring" function may include, for example, information indicating whether the "Data Inactivity Monitoring" function is supported at the time of dual connectivity, or, for example, information indicating whether the "Data Inactivity Monitoring" function in each cell group is supported. The cell group is, for example, the MCG or the SCG.

In step S32, the eNB 10 transmits "Data Inactivity Timer configuration" to the UE 20. The "Data Inactivity Timer configuration" may include information specifying the MAC entity that performs monitoring. By the "Data Inactivity Timer configuration," for example, the MAC entity of the MCG alone may be specified; the MAC entity of the SCG alone may be specified; or the MAC entity of the MCG and the MAC entity of the SCG may be specified.

If three or more cell groups are defined, the "Data Inactivity Timer configuration" may include information specifying whether monitoring is required for each cell group.

Note that step S31 and step S32 may be individually executed, or the order of execution may be reversed.

According to the above-described embodiments, during communication to which dual connectivity is applied, upon transmission or reception of data by a MAC entity, the user equipment 20 can prevent inconsistency in RRC states between MAC entities by resetting Data Inactivity Timers in all MAC entities.

Namely, during communication to which dual connectivity is applied, a communication state can be appropriately monitored.

### (Device Configuration)

Next, a functional configuration example of the base station apparatus 10 and the user equipment 20 that execute the process and operation described above is described. The base station apparatus 10 and the user equipment 20 include the functions for implementing the above-described embodiments. However, each of the base station apparatus 10 and the user equipment 20 may include only some of the functions in the embodiments.

### <Base station apparatus 10>

FIG. 8 is a diagram illustrating an example of a functional configuration of the base station apparatus 10. As illustrated in FIG. 8, the base station apparatus 10 includes a transmitting unit 110, a receiving unit 120, a setting unit 130, and a control unit 140. The functional configuration illustrated in FIG. 8 is only one example. Functional division and names of the functional units may be any division and names, provided that the operation according to an embodiment of the present invention can be performed.

The transmitting unit 110 includes a function for generating a signal to be transmitted to the user equipment 20 and transmitting the signal through radio. The receiving unit 120 includes a function for receiving various signals transmitted from the user equipment 20 and retrieving, for example, higher layer information from the received signals. The transmitting unit 110 is provided with a function for transmitting NR-PSS, NR-SSS, NR-PBCH, DL/UL control signals, DL reference signals, etc., to the user equipment 20.

The setting unit 130 stores preconfigured configuration information and various types of configuration information transmitted to the user equipment 20 in a storage device, and reads out the information as necessary. The content of the configuration information is, for example, information on a configuration of communication to which dual connectivity is applied.

As described in the embodiments, the control unit 140 performs the processing related to a configuration for the user equipment 20 to perform communication to which dual connectivity is applied. The control unit 140 transmits a scheduling of communication to which dual connectivity is applied to the user equipment 20 through the transmitting unit 110. A functional unit related to signal transmission in the control unit 140 may be included in the transmission unit 110, and a functional unit related to signal reception in the control unit 140 may be included in the receiving unit 120.

### <User equipment 20>

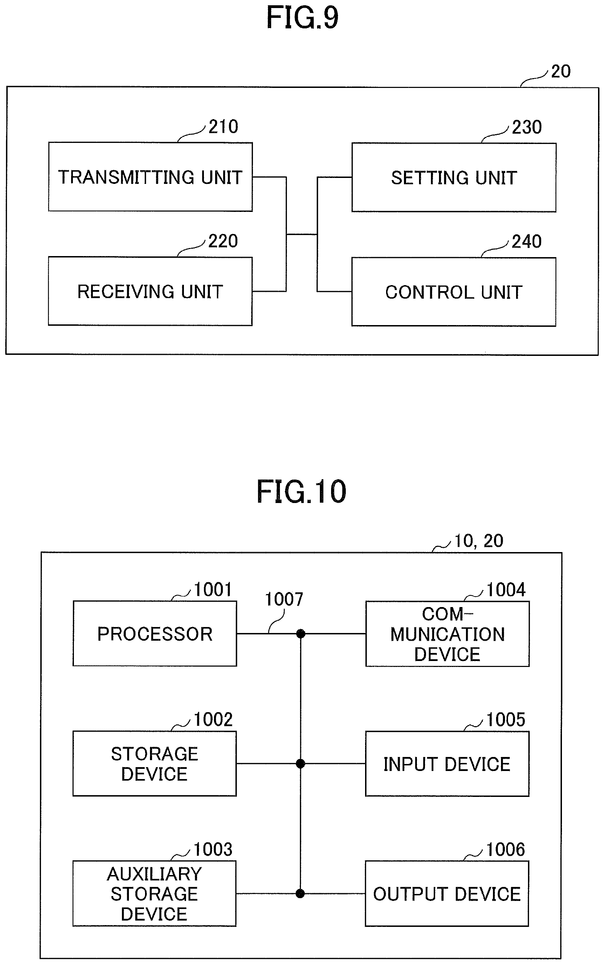

FIG. 9 is a diagram illustrating an example of a functional configuration of the user equipment 20. As illustrated in FIG. 9, the user equipment 20 includes a transmitting unit 210, a receiving unit 220, a setting unit 230, and a control unit 240. The functional configuration illustrated in FIG. 9 is only one example. Functional division and names of the functional units may be any division and names, provided that the operation according to the embodiments of the present invention can be performed.

The transmitting unit 210 generates a transmit signal from transmit data and transmits the transmit signal through radio. The receiving unit 220 receives various types of signals wirelessly and retrieves a higher layer signal from the received physical layer signal. The receiving unit 220 is provided with a function to receive NR-PSS, NR-SSS, NR-PBCH, DL/UL/SL control signals, or reference signals, etc., transmitted from the base station apparatus 10.

The setting unit 230 stores various types of setting information received from the base station apparatus 10 or the user equipment 20 by the receiving unit 220 in the storage device and reads it from the storage device depending on necessity. The setting unit 230 also stores preconfigured configuration information. The content of the configuration information is, for example, information related to a configuration of communication to which dual connectivity is applied, etc.

The control unit 240 controls communication to which dual connectivity is applied, as described in the embodiments. The control unit 240 also controls monitoring for detecting data deactivation of communication to which dual connectivity is applied. A functional unit related to signal transmission in the control unit 240 may be included in the transmitting unit 210, and a functional unit related to signal reception in the control unit 240 may be included in the receiving unit 220.

### (Hardware configuration)

The block diagrams (FIG. 8 and FIG. 9) used for describing the above-described embodiments show blocks of functional units. These functional blocks (components) are implemented by any combination of at least one of hardware and software. Additionally, means for implementing each functional block is not particularly limited. Namely, each functional block may be implemented by a single device that is physically or logically combined, or two or more devices that are physically or logically separated may be directly or indirectly connected (e.g., using wire, radio, etc.) and implemented using these multiple devices. The functional block may be implemented by combining software with the device or devices.

Functions include, but are not limited to, judgment, decision, determination, computation, calculation, processing, derivation, investigation, search, verification, reception, transmission, output, access, resolution, choice, selection, establishment, comparison, assumption, expectation, deeming, broadcasting, notifying, communicating, forwarding, configuring, reconfiguring, allocating, mapping, assigning, etc. For example, a functional block (component) that functions to transmit is called a transmitting unit or a transmitter. In either case, as described above, the method of implementation is not particularly limited.

For example, the base station apparatus 10, the user equipment 20, etc., according to the embodiments of the present disclosure may function as a computer for processing the radio communication method of the present disclosure. FIG. 10 is a diagram illustrating an example of a hardware configuration of the base station apparatus 10 and the user equipment 20 according to an embodiment of the present disclosure. The base station apparatus 10 and the user equipment 20 described above may be physically configured as a computer device including a processor 1001, a storage device 1002, an auxiliary storage device 1003, a communication device 1004, an input device 1005, an output device 1006, a bus 1007, etc.

In the following description, the term "apparatus" can be read as circuits, devices, units, etc. The hardware configuration of the base station apparatus 10 and the user equipment 20 may be configured to include one or more of the devices shown in the figure or may be configured without some of the devices.

Each function in the base station apparatus 10 and the user equipment 20 is implemented by causing the processor 1001 to perform an operation by reading predetermined software (a program) on hardware, such as the processor 1001 and the storage device 1002, and by controlling communication by the communication device 1004 and controlling at least one of reading and writing of data in the storage device 1002 and the auxiliary storage device 1003.

The processor 1001 operates, for example, an operating system to control the entire computer. The processor 1001 may be formed of a central processing unit (CPU) including an interface with peripheral devices, a controller, a processor, a register, etc. For example, the above-described control unit 140, control unit 240, etc., may be implemented by the processor 1001.

The processor 1001 reads out a program (program code), software module, data, etc., from at least one of the auxiliary storage device 1003 and the communication device 1004 to the storage device 1002 and performs various types of processing in accordance with these. As a program, a program that causes a computer to execute at least a part of the operation described in the above-described embodiments is used. For example, the control unit 140 of the base station apparatus 10 illustrated in FIG. 8 may be stored in the storage device 1002 and implemented by a control program operated by the processor 1001. For example, the control unit 240 of the user equipment 20 illustrated in FIG. 9 may be implemented by a control program stored in the storage device 1002 and operated by the processor 1001. The above-described various types of processes are described to be executed by the single processor 1001. However, the above-described various types of processes may be simultaneously or sequentially executed by two or more processors 1001. The processor 1001 may be implemented by one or more chips. The program may be transmitted from the network via a telecommunication line.

The storage device 1002 is a computer readable recording medium, and the storage device 1002 may be formed of at least one of a ROM (Read-Only Memory), an EPROM (Erasable Programmable ROM), an EEPROM (Electrically Erasable Programmable ROM), a RAM (random access memory), etc., for example. The storage device 1002 may be referred to as a register, a cache, a main memory (main storage device), etc. The storage device 1002 can store programs (program codes), software modules, etc., that can be executed to perform the process according to the embodiments of the present invention.

The auxiliary storage device 1003 is a computer readable recording medium, and, for example, the auxiliary storage device 1003 may be formed of at least one of an optical disk such as a CD-ROM (Compact Disc ROM), a hard disk drive, a flexible disk, a magneto-optical disk (for example, a compact disk, a digital versatile disk, a Blu-ray (registered trademark) disk), a smart card, a flash memory (for example, a card, a stick, a key drive), a floppy (registered trademark) disk, a magnetic strip, etc. The above-described storage medium may be, for example, a database including at least one of the storage device 1002 and the auxiliary storage device 1003, a server, or any other suitable medium.

The communication device 1004 is hardware (transmission/reception device) for performing communication between computers via at least one of a wired and wireless network, and, for example, the communication device 1004 is also referred to as a network device, a network controller, a network card, a communication module, etc. The communication device 1004 may include a high frequency switch, duplexer, filter, frequency synthesizer, etc., for example, to implement at least one of a frequency division duplex (FDD) and a time division duplex (TDD). For example, a transmitting/receiving antenna, an amplifier unit, a transceiver unit, a transmission line interface, etc., may be implemented by the communication device 1004. The transceiver unit may be implemented to be physically or logically separated between a transmitting unit and a receiving unit.

The input device 1005 is an input device (e.g., a keyboard, a mouse, a microphone, a switch, a button, a sensor, etc.) for receiving an input from outside. The output device 1006 is an output device (e.g., display, speaker, LED lamp, etc.) that performs output toward outside. Note that the input device 1005 and the output device 1006 may be integrated (for example, a touch panel).

Furthermore, the devices, such as the processor 1001 and the storage device 1002, are connected by a bus 1007 for communicating information. The bus 1007 may be formed of a single bus, or the bus 1007 may be formed of buses that are different among the devices.

Furthermore, each of the base station apparatus 10 and the user equipment 20 may be configured to include hardware, such as a microprocessor, a digital signal processor (DSP: Digital Signal Processor), an ASIC (Application Specific Integrated Circuit), a PLD (Programmable Logic Device), an FPGA (Field Programmable Gate Array), etc., and a part or all of the functional blocks may be implemented by the hardware. For example, the processor 1001 may be implemented by using at least one of these hardware components.

### (Conclusion of the embodiments)

As described above, according to the embodiments of the present invention, there is provided user equipment including a communication unit that performs first communication with a first base station apparatus and second communication with a second base station apparatus by applying dual connectivity; and a control unit that starts or restarts a data inactivity timer in a MAC (Media Access Control) entity for the first communication and that starts or restarts a data inactivity timer in a MAC entity for the second communication, upon occurrence of transmission or reception in any of the first communication and the second communication.

According to the above-described configuration, during communication to which dual connectivity is applied, upon occurrence of transmission or reception of data in a MAC entity, the user equipment 20 can prevent inconsistency in RRC states between the MAC entities by resetting the Data Inactivity Timers in all the MAC entities. Namely, during communication to which dual connectivity is applied, a communication state can be appropriately monitored.

Upon detecting expiration of the data inactivity timer one of the MAC entity for the first communication and the MAC entity for the second communication, the detection of the expiration of the data inactivity timer may be transmitted from the MAC entity in which the expiration of the data inactivity timer is detected to the other MAC entity. With this configuration, in the user equipment 20, a MAC entity can perform processing, in response to the expiration of the Data Inactivity Timer detected in the other MAC entity, as a trigger.

Upon detecting the expiration of the data inactivity timer in the MAC entity for the first communication, an RRC (Radio Resource Control) state may be made to transition to RRC Idle. With this configuration, upon termination of communication of the MN, the user equipment 20 can transition to the RRC Idle state.

Upon detecting the expiration of the data inactivity timer in the MAC entity for the second communication, SCG (Secondary Cell Group) Failure may be transmitted to the first base station apparatus. With this configuration, upon occurrence of a radio link failure in the SCG, the user equipment 20 can report, to the MN, the SCG Failure.

The communication unit may transmit, to a network, information indicating whether, during application of dual connectivity, monitoring using a data inactivity timer is supported. With this configuration, the user equipment 20 can report, to the base station apparatus 10, whether a Data Inactivity Monitoring function is provided.

Furthermore, according to the embodiments of the present invention, there is provided a base station apparatus including a communication unit that performs communication with user equipment by applying dual connectivity; and a control unit that reports, to the user equipment, information indicating which of a plurality of MAC (Media Access Control) entities for the communication to which the dual connectivity is applied performs monitoring using a data inactivity timer.

With the above-described configuration, during communication to which dual connectivity is applied, upon occurrence of transmission or reception of data in a MAC entity, the user equipment 20 can prevent inconsistency in RRC states between the MAC entities by resetting Data Inactivity Timer in all the MAC entities. Namely, during communication to which dual connectivity is applied, a communication state can be appropriately monitored.

### (Supplemental embodiments)

The embodiments of the present invention are described above. However, the disclosed invention is not limited to the above-described embodiments, and those skilled in the art would appreciate various modified examples, revised examples, alternative examples, substitution examples, and so forth. In order to facilitate understanding of the invention, specific numerical value examples are used for description. However, the numerical values are merely examples, and any suitable values may be used unless as otherwise specified. The classification of items in the above description is not essential to the present invention. Matter described in two or more items may be combined and used as necessary, and matter described in one item may be applied to matter described in another item (provided that they do not contradict). The boundary between functional units or processing units in a functional block diagram does not necessarily correspond to the boundary between physical components. Operations of a plurality of functional units may be performed physically by one component, or an operation of one functional unit may be physically performed by a plurality of parts. The order of the procedures described in the embodiments may be changed, provided that they do not contradict. For the sake of convenience of processing description, the base station apparatus 10 and the user equipment 20 are described using the functional block diagrams. However, such devices may be implemented by hardware, software, or a combination thereof. Each of software executed by the processor included in the base station apparatus 10 according to the embodiments of the present invention and software executed by the processor included in the user equipment 20 according to the embodiments of the present invention may be stored in a random access memory (RAM), a flash memory, a read only memory (ROM), an EPROM, an EEPROM, a register, a hard disk (HDD), a removable disk, a CD-ROM, a database, a server, or any other appropriate storage medium.

Notification of information is not limited the aspects/embodiments described in the present specification and may be performed by other methods. For example, notification of information may be performed via physical layer signaling (for example, (DCI) Downlink Control Information or UCI (Uplink Control Information), higher-layer signaling (for example, RRC (Radio Resource Control) signaling, MAC (Medium Access Control) signaling, broadcast information (MIB (Master Information Block), or SIB (System Information Block), other signals, or by a combination thereof. Furthermore, RRC signaling may be referred to as an RRC message. For example, the RRC message may be an RRC connection setup (RRC Connection Setup) message, an RRC connection reconfiguration (RRC Connection Reconfiguration) message, etc.

Each aspect/embodiment described in present disclosure may be applied to at least one of LTE (Long Term Evolution), LTE-A (LTE-advanced), SUPER 3G, IMT-Advanced, 4G (4th generation mobile communication system), 5G (5th generation mobile communication system), FRA (Future Radio Access), NR (new Radio), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-Wideband), Bluetooth (registered trademark), any other systems using an appropriate system and next generation systems extended on the basis of these systems. Furthermore, a plurality of systems may be combined (e.g., a combination of at least one of LTE and LTE-A and 5G, etc.).

In processing procedures, sequences, flowcharts, etc., of each aspect/embodiment described in the specification, the order may be changed provided that there is no contradiction.
For example, for the methods described in the specification, the elements of the various steps are presented in an exemplary order and are not limited to a specific order presented.

The specific operations that are described in the specification to be performed by the base station apparatus 10 may be performed by their upper nodes in some cases. In a network formed of one or more network nodes including the base station apparatus 10, it is apparent that the various operations performed for communication with the user equipment 20 may be performed by the base station apparatus 10 and a network node other than the base station apparatus 10 (e.g., MME or S-GW can be considered, however, not limited to these). In the above description, a case is exemplified in which there is one network node other than the base station apparatus 10. However, it can be a combination of other network nodes (e.g., MME and S-GW) .

The information or signals described in this disclosure can be output from a higher layer (or lower layer) to a lower layer (or higher layer). It may be input and output through multiple network nodes.

Input and output information, etc., may be stored in a specific location (e.g., memory) or managed using management tables. Input and output information, etc., may be overwritten, updated, or added. Output information, etc., may be deleted. The input information, etc., may be transmitted to another device.

The determination in this disclosure may be made by a value (0 or 1) represented by 1 bit, by a true or false value (Boolean: true or false), or by a numerical comparison (e.g., a comparison with a predetermined value).

Software should be broadly interpreted to mean, regardless of whether it is referred to as software, firmware, middleware, microcode, hardware description language, or any other name, instructions, sets of instructions, code, code segments, program code, programs, subprograms, software modules, applications, software applications, software packages, routines, subroutines, objects, executable files, executable threads, procedures, functions, etc.

Software, instructions, information, and the like may also be transmitted and received via a transmission medium. For example, when software is transmitted from a website, server, or other remote source using at least one of wireline technology (such as coaxial cable, fiber optic cable, twisted pair, digital subscriber line) and radio technology (infrared, microwave, etc.), at least one of these wireline technology and wireless technology is included within the definition of a transmission medium.

The information, signals and the like described in this disclosure may be represented using any of a variety of different techniques. For example, data, instructions, commands, information, signals, bits, symbols, chips, etc., which may be referred to throughout the above description may be represented by voltages, currents, electromagnetic waves, magnetic fields or magnetic particles, optical fields or photons, or any combination thereof.

The terms described in this disclosure and those necessary for understanding this disclosure may be replaced with terms having the same or similar meanings. For example, at least one of the channels and the symbols may be a signal (signaling). The signal may also be a message. A component carrier may also be referred to as a carrier frequency, cell, frequency carrier, or the like.

As used in this disclosure, the terms "system" and "network" are used interchangeably.

The information, parameters, and the like described in the present disclosure may also be expressed using absolute values, relative values from predetermined values, or they may be expressed using corresponding separate information. For example, a radio resource may be indicated by an index.

The name used for the parameters described above is not restrictive in any respect. In addition, the mathematical equations using these parameters may differ from those explicitly disclosed in this disclosure. Since the various channels (e.g., PUCCH, PDCCH, etc.) and information elements can be identified by any suitable name, the various names assigned to these various channels and information elements are not in any way limiting.

In this disclosure, the terms "Base Station," "Radio Base Station," "Base Station Apparatus," "Fixed Station," "NodeB," "eNodeB (eNB)," "gNodeB (gNB)," "Access Point," "Transmission Point," "Reception Point," "Transmission/Reception Point," "Cell," "Sector," "Cell Group," "Carrier," "Component Carrier" and the like may be used interchangeably, and may be referred to in terms, such as a macro cell, a small cell, a femtocell, a pico-cell and the like.

A base station can accommodate one or more (e.g., three) cells. When a base station accommodates a plurality of cells, the entire coverage area of the base station can be divided into a plurality of smaller areas, each smaller area can also provide communication services by means of a base station subsystem (e.g., an indoor small base station (RRH: Remote Radio Head). The term "cell" or "sector" refers to a portion or all of the coverage area of at least one of the base station and base station subsystem that provides communication services at the coverage.

In this disclosure, terms such as "MS: Mobile Station," "user terminal," "UE: User Equipment," "terminal," and the like may be used interchangeably.

The mobile station may be referred to by one of ordinary skill in the art as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable term.

At least one of the base stations and the mobile station may be referred to as a transmitter, receiver, communication device, or the like. At least one of the base station and the mobile station may be a device installed in a mobile body, a mobile body itself, or the like. The mobile body may be a vehicle (e.g., a car, an airplane, etc.), an unmanned mobile (e.g., a drone, an automated vehicle, etc.), or a robot (manned or unmanned). At least one of the base station and the mobile station includes a device that does not necessarily move during communication operations. For example, at least one of the base station and the mobile station may be an IoT (Internet of Things) device, such as a sensor.

In addition, the base station in the present disclosure may be read by the user terminal. For example, each aspect/embodiment of the present disclosure may be applied to a configuration in which communication between base stations and user terminals is replaced with communication between multiple units of user equipment 20 (e.g., may be referred to as D2D (Device-to-Device), V2X (Vehicle-to-Everything), etc.). In this case, the function of the base station apparatus 10 described above may be provided by the user equipment 20. The phrases "upstream" and "downstream" may also be replaced with the phrases corresponding to terminal-to-terminal communication (e.g., "side"). For example, an upstream channel, an downstream channel, or the like may be read by a side channel.

Similarly, the user terminal in the present disclosure may be read by the base station. In this case, the base station may have the functions provided by the user terminal described above.

As used in this disclosure, the terms "determining" and "determining" may encompass a wide variety of operations. For example, "determining" and "deciding" may include deeming that a result of judging, calculating, computing, processing, deriving, investigating, looking up, searching, inquiring (e.g., search in a table, a database, or another data structure), or ascertaining is determined or decided. Furthermore, "determining" and "deciding" may include, for example, deeming that a result of receiving (e.g., reception of information), transmitting (e.g., transmission of information), input, output, or accessing (e.g., accessing data in memory) is determined or decided. Furthermore, "determining" and "deciding" may include deeming that a result of resolving, selecting, choosing, establishing, or comparing is determined or decided. Namely, "determining" and "deciding" may include deeming that some operation is determined or decided. Furthermore, "determining (deciding)" may be read as "assuming," "expecting," "considering," etc.

The terms "connected," "coupled," or any variation thereof mean any direct or indirect connection or coupling between two or more elements, and may include the presence of one or more intermediate elements between the two elements "connected" or "coupled" to each other. The coupling or connection between the elements may be physical, logical or a combination thereof. For example, "connection" may be read as "access." Two elements, when used in this specification, can be considered to be mutually "connected" or "coupled by using one or more wires, cables and/or printed electrical connections, and, as some non-limiting and non-comprehensive examples, by using electromagnetic energy such as electromagnetic energy with a wavelength in a radio frequency range, a microwave range, and an optical range (both visible and invisible).

The reference signal may be abbreviated as RS (Reference Signal), and may be referred to as a pilot (Pilot) according to applicable standards.

The expression "on the basis of" used in the present disclosure does not mean "on the basis of only" unless otherwise stated particularly. In other words, the expression "on the basis of" means both "on the basis of only" and "on the basis of at least."

Any reference to elements using names, such as "first" and "second," as used in this disclosure does not generally limit the amount or order of those elements. These names can be used in this specification as a convenient way to distinguish between two or more elements. Accordingly, the reference to the first and second elements does not imply that only two elements can be adopted, or that the first element must precede the second element in some way.

The "means" in the configuration of each of the above-described devices may be replaced with "part," "circuit," "device," etc.

As long as "include," "including," and variations thereof are used in this disclosure, the terms are intended to be inclusive in a manner similar to the term "comprising." Furthermore, the term "or" used in the disclosure is intended not to be an exclusive OR.

A radio frame may be formed of one or more frames in the time domain. In the time domain, each of the one or more frames may be referred to as a subframe. A subframe may further be formed of one or more slots in the time domain. A subframe may be a fixed time length (e.g., 1 ms) that does not depend on numerology.

The numerology may be a communication parameter to be applied to at least one of transmission or reception of a signal or a channel. The numerology may represent, for example, at least one of a subcarrier spacing (SCS: SubCarrier Spacing), a bandwidth, a symbol length, a cyclic prefix length, a transmission time interval (TTI: Transmission Time Interval), a symbol number per TTI, a radio frame configuration, a specific filtering process performed by a transceiver in a frequency domain, a specific windowing process performed by a transceiver in a time domain, etc.

A slot may be formed of, in a time domain, one or more symbols (OFDM (Orthogonal Frequency Division Multiplexing) symbols, SC-FDMA (Single Carrier Frequency Division Multiple Access) symbols, etc.). A slot may be a unit of time based on the numerology.

A slot may include a plurality of mini-slots. In a time domain, each mini-slot may be formed of one or more symbols. A mini-slot may also be referred to as a sub-slot. A mini-slot may be formed of fewer symbols than those of a slot. The PDSCH (or PUSCH) transmitted in a unit of time that is greater than a mini-slot may be referred to as PDSCH (or PUSCH) mapping type A. The PDSCH (or PUSCH) transmitted using a mini-slot may be referred to as PDSCH (or PUSCH) mapping type B.

Each of the radio frame, subframe, slot, mini-slot, and symbol represents a time unit for transmitting a signal. The radio frame, subframe, slot, mini-slot, and symbol may be called by respective different names.

For example, one subframe may be referred to as a transmission time interval (TTI: Transmission Time Interval), a plurality of consecutive subframes may be referred to as TTI, or one slot or one mini-slot may be referred to as TTI. Namely, at least one of a subframe and TTI may be a subframe (1 ms) in the existing LTE, may be a time interval shorter than 1 ms (e.g., 1 to 13 symbols), or a time interval longer than 1 ms. Note that the unit representing the TTI may be referred to as a slot, a mini-slot, etc., instead of a subframe.

Here, the TTI refers to, for example, the minimum time unit of scheduling in radio communication. For example, in the LTE system, the base station performs scheduling for allocating radio resources (such as a frequency bandwidth, transmission power, etc., that can be used in each unit of user equipment 20) in units of TTIs to each unit of user equipment 20. Note that the definition of the TTI is not limited to this.

The TTI may be a transmission time unit, such as a channel coded data packet (transport block), a code block, a codeword, etc., or may be a processing unit for scheduling, link adaptation, etc. Note that, when a TTI is provided, a time interval (e.g., a symbol number) onto which a transport block, a code block, or a code ward is actually mapped may be shorter than the TTI.

Note that, when one slot or one mini-slot is referred to as a TTI, one or more TTIs (i.e., one or more slots or one or more mini-slots) may be the minimum time unit of scheduling. Additionally, the number of slots (the number of mini-slots) forming the minimum time unit of scheduling may be controlled.

A TTI with a time length of 1 ms may be referred to as an ordinary TTI (TTI in LTE Rel. 8-12), a normal TTI, a long TTI, an ordinary subframe, a normal subframe, a long subframe, a slot, etc. A TTI that is shorter than a normal TTI may be referred to as a shortened TTI, a short TTI, a partial TTI (partial TTI or fractional TTI), a shortened subframe, a short subframe, a mini-slot, a sub-slot, a slot, etc.

Note that a long TTI (e.g., a normal TTI, a subframe, etc.) may be replaced with a TTI with a time length exceeding 1 ms, and a short TTI (e.g., a shortened TTI, etc.) may be replaced with a TTI with a TTI length that is shorter than the TTI length of the long TTI and longer than or equal to 1 ms.

A resource block (RB) is a resource allocation unit in the time domain and the frequency domain, and may include one or more consecutive subcarriers in the frequency domain. A number of subcarriers included in a RB may be the same irrespective of numerology, and may be 12, for example. The number of subcarriers included in a RB may be determined based on numerology.

Additionally, the resource block may include one or more symbols in the time domain, and may have a length of one slot, one mini-slot, one subframe, or one TTI. Each of one TTI and one subframe may be formed of one or more resource blocks.

Note that one or more RBs may be referred to as a physical resource block (PRB: Physical RB), a subcarrier group (SCG: Sub-Carrier Group), a resource element group (REG: Resource Element Group), a PRB pair, a RB pair, etc.

Additionally, a resource block may be formed of one or more resource elements (RE: Resource Element). For example, 1 RE may be a radio resource area of 1 subcarrier and 1 symbol.

A bandwidth part (BWP: Bandwidth Part) (which may also be referred to as a partial bandwidth, etc.) may represent, in a certain carrier, a subset of consecutive common RB (common resource blocks) for a certain numerology. Here, the common RB may be specified by an index of a RB when a common reference point of the carrier is used as a reference. A PRB may be defined in a BWP, and may be numbered in the BWP.

The BWP may include a BWP for UL (UL BWP) and a BWP for DL (DL BWP). For a UE, one or more BWPs may be configured within one carrier.

At least one of the configured BWPs may be active, and the UE is may not assume that a predetermined signal/channel is communicated outside the active BWP. Note that "cell," "carrier," etc. in the present disclosure may be replaced with "BWP."

The structures of the above-described radio frame, subframe, slot, mini-slot, symbol, etc., are merely illustrative. For example, the following configurations can be variously changed: the number of subframes included in the radio frame; the number of slots per subframe or radio frame; the number of mini-slots included in the slot; the number of symbols and RBs included in the slot or mini-slot; the number of subcarriers included in the RB; and the number of symbols, the symbol length, the cyclic prefix (CP: Cyclic Prefix) length, etc., within the TTI.

In the present disclosure, for example, if an article is added by translation, such as a, an, and the in English, the present disclosure may include that the noun following the article is plural.

In the present disclosure, the term "A and B are different" may imply that "A and B are different from each other." Note that the term may also imply "each of A and B is different from C." The terms, such as "separated," "coupled," etc., may also be interpreted similarly.

The aspects/embodiments described in this disclosure may be used alone, in combination, or switched with implementation. Notification of predetermined information (e.g. "X" notice) is not limited to a method that is explicitly performed, and may also be made implicitly (e.g. "no notice of the predetermined information").

In the present disclosure, the transmitting unit 210 and the receiving unit 220 is an example of a communication unit. The MN is an example of a first base station. The SN is an example of a second base station. The Data Inactivity Timer is an example of a data inactivity timer.

While the present disclosure is described in detail above, those skilled in the art will appreciate that the present disclosure is not limited to the embodiments described in the present disclosure. The disclosure may be implemented as modifications and variations without departing from the gist and scope of the disclosure as defined by the claims. Accordingly, the description of the present disclosure is for illustrative purposes only and is not intended to have any restrictive meaning with respect to the present disclosure.

This international patent application is based on and claims priority to Japanese Patent Application No. 2018-192169 filed on October 10, 2018, and the entire content of Japanese Patent Application No. 2018-192169 is incorporated herein by reference.

### LIST OF REFERENCE SYMBOLS

- 10: base station apparatus (eNB)
- 110: transmitting unit
- 120: receiving unit
- 130: setting unit
- 140: control unit
- 20: user equipment (UE)
- 210: transmitting unit
- 220: receiving unit
- 230: setting unit
- 240: control unit
- 1001: processor
- 1002: storage device
- 1003: auxiliary storage device
- 1004: communication device
- 1005: input device
- 1006: output device

## Claims

1. User equipment comprising:
a communication unit that performs first communication with a first base station apparatus and second communication with a second base station apparatus by applying dual connectivity; and
a control unit that starts or restarts a data inactivity timer in a MAC (Media Access Control) entity for the first communication and that starts or restarts a data inactivity timer in a MAC entity for the second communication, upon occurrence of transmission or reception in any of the first communication and the second communication.

2. The user equipment according to claim 1, wherein, upon detecting expiration of the data inactivity timer one of the MAC entity for the first communication and the MAC entity for the second communication, the detection of the expiration of the data inactivity timer is transmitted from the MAC entity in which the expiration of the data inactivity timer is detected to the other MAC entity.

3. The user equipment according to claim 1, wherein, upon detecting the expiration of the data inactivity timer in the MAC entity for the first communication, an RRC (Radio Resource Control) state is made to transition to RRC Idle.

4. The user equipment according to claim 1, wherein, upon detecting the expiration of the data inactivity timer in the MAC entity for the second communication, SCG (Secondary Cell Group) Failure is transmitted to the first base station apparatus.

5. The user equipment according to claim 1,
wherein the communication unit transmits, to a network, information indicating whether, during application of dual connectivity, monitoring using a data inactivity timer is supported.

6. A base station apparatus comprising:
a communication unit that performs communication with user equipment by applying dual connectivity; and
a control unit that reports, to the user equipment, information indicating which of a plurality of MAC (Media Access Control) entities for the communication to which the dual connectivity is applied performs monitoring using a data inactivity timer.
